(19)

Europäisches
Patentamt
European
Patent Office
Office européen
des brevets

(11)  EP 3 653 673 A1

## (12)  EUROPEAN PATENT APPLICATION

(43) Date of publication:
**20.05.2020 Bulletin 2020/21**

(21) Application number: **18306504.4**

(22) Date of filing: **16.11.2018**

(51) Int Cl.:
*C09C 1/30* (2006.01)          *C02F 1/28* (2006.01)
*C08K 3/013* (2018.01)        *C01B 33/18* (2006.01)
*C01B 33/193* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **RHODIA OPERATIONS
75009 Paris (FR)**

(72) Inventors:
• **GARBEY, Pascaline
  69370 Saint Didier au Mont d'Or (FR)**

• **PINAULT, Anne-Laure
  94260 FRESNES (FR)**
• **CHAUSSEE, Thomas
  69270 FONTAINES SAINT MARTIN (FR)**
• **FERAL-MARTIN, Cédric
  77184 EMERAINVILLE (FR)**

(74) Representative: **Ferri, Isabella**
Solvay S.A.
**Viale Lombardia, 20
20021 Bollate (MI) (IT)**

## (54)  ORGANOSILANE-MODIFIED PRECIPITATED SILICA

(57) A process for the preparation of an organosilane-modified silica

EP 3 653 673 A1

**Description**

**Technical Field**

The present invention relates to an organosilane-modified precipitated silica useful in the preparation of elastomeric mixtures and to its process of preparation.

**Background Art**

The use of precipitated silica as filler in polymeric compositions is known to improve the physical properties of the polymer. A problem associated with the use of particulate inorganic oxides, such as silica, in cured rubber compositions is their rather low degree of dispersion in the polymeric matrix. To obviate these issues the surfaces of such fillers are often modified to increase the reactivity and consequently the dispersion and the coupling of the filler within the polymeric composition. It is also known to modify the surface of fillers with hydrophobic organic molecules to improve the compatibility of the inorganic hydrophilic filler with the organic polymer matrix.

Among the commonly used hydrophobic molecules for the modification of filler surface, in particular of silica surfaces, mention can be made of silanes, in particular alkoxysilanes, silazanes or halosilanes.

WO2008/033506 discloses a method of preparing hydrophobic silica particles comprising (a) providing an acidic aqueous dispersion of silica, (b) combining the dispersion with an alkoxysilane compound to provide a reaction mixture, and (c) drying the reaction mixture to provide hydrophobic silica particles. The experimental data provided in WO 2008/033506 disclose a process wherein the reaction of the alkoxysilane with the silica is performed in the presence of an organic compound other than the alkoxysilane, either hexamethyldisilazane or 2-propanol, and wherein the overall reaction time was in the order of hours.

CN105060304 discloses a method for the modification of precipitated silica wherein a sodium silicate is reacted with sulfuric acid to obtain precipitated silica; the pH of the suspension is adjusted to a value of 3.5-9 and an alcoholic solution of a silane, i.e. KH 570 (gamma-methacryloxypropyltrimethoxysilane), is added to the suspension and allowed to react for 30-150 minutes before separation and drying of the modified silica.

The methods disclosed in these documents rely on the use of alcoholic solutions of the silane and/or the use of alcoholic solutions as reaction media and long reaction times between the silica and the silane. The presence of alcohols represents a safety concern for the drying of the precipitated silica, in particular at the industrial scale, where large volumes of solids are dried at elevated temperatures. Additionally, the presence of organic compounds in the gaseous streams generated in the process represents an environmental concern which may require the installation of specific treatment units. Long reaction times are also a limitation to the industrial implementation of the processes of the prior art.

It has now been discovered that organosilane-modified precipitated silica having good ability to incorporate and disperse in elastomeric matrices can be obtained by means of an alcohol-free process. The process additionally requires low reaction times between the silica and the organosilane allowing for a cost effective procedure.

**Description of invention**

A first object of the invention is thus an organosilane-modified precipitated silica characterised in that a solid-state Si nuclear magnetic resonance spectrum of the organosilane-modified precipitated silica exhibits a ratio $(T0 + T1)/T_{tot}$ greater than 15%, wherein:

$$T_{tot} = T0 + T1 + T2 + T3;$$

T0 is the integrated intensity of a peak having a chemical shift in the CP/MAS $^{29}$Si NMR spectrum in the range of -43 ppm to -49 ppm;

T1 is the integrated intensity of a peak having a chemical shift in the CP/MAS $^{29}$Si NMR spectrum in the range of -49 ppm to -55 ppm;

T2 is the integrated intensity of a peak having a chemical shift in the CP/MAS $^{29}$Si NMR spectrum in the range of -56 ppm to -59 ppm; and

T3 is the integrated intensity of a peak having a chemical shift in the CP/MAS $^{29}$Si NMR spectrum in the range of -65 ppm to -69 ppm.

In the remainder of the text the terms "silica" and "precipitated silica" may be used interchangeably to refer to precipitated silica.

In the expression "integrated intensity of a peak having a chemical shift in the CP/MAS $^{29}$Si NMR spectrum in the range of X ppm to Y ppm" the expression "intensity of a peak" refers to the maximum peak height of the signal occurring within the range X ppm to Y ppm, the "integrated intensity of a peak" is the area of said peak as calculated using standard calculation methods well known to those skilled in the art.

The expression "organosilane-modified precipitated silica" is used herein to refer to a precipitated silica whose surface has been reacted with an organosilane. The inventive silica comprises organosilane moieties chemically bound to at least a portion of the Si atoms of the silica structure. In particular, the expression refers to a precipitated silica whose surface has been reacted with an organosilane of general formula (I):

$$R_nSiX_{4-n} \qquad (I)$$

wherein each R is independently selected from the group consisting of hydrocarbon radicals comprising 1 to 12 carbon atoms and organofuctional hydrocarbon radicals comprising 1 to 12 carbon atoms; each X is independently selected from the group consisting of halogen and the alkoxy radicals comprising 1 to 12 carbon atoms; and n is 1, 2 or 3, preferably n is 1 or 2, more preferably n is 1.

In formula (I) each R can be a saturated or unsaturated, substituted or non-substituted, hydrocarbon radical. Each R can be, for example, an alkyl radical such as methyl, ethyl, t-butyl, hexyl, heptyl, octyl, decyl, and dodecyl; an alkenyl radical such as vinyl, allyl, and hexenyl; a substituted alkyl radical such as chloromethyl, 3,3,3-trifluoropropyl, and 6-chlorohexyl; and an aryl radical such as phenyl, naphthyl, and tolyl. Each R can be an organofunctional hydrocarbon radical comprising 1 to 12 carbon atoms where, for example, the functionality is mercapto, disulfide, polysulfide, amino, carboxylic acid, carbinol, ester, or amido. A preferred organofunctional hydrocarbon radical is one having disulfide or polysulfide functionality.

In formula (I) each X is independently selected from the group consisting of the alkoxy radicals comprising 1 to 12 carbon atoms. Notable non-limiting examples of suitable alkoxy radicals are methoxy, ethoxy, propoxy and or butoxy radicals. Preferably X is selected from the group consisting of methoxy, ethoxy or propoxy radicals.

Notable, non-limiting examples of suitable organosilanes of formula (I) are for instance (3-mercaptopropyl)trimethoxysilane, (3-mercaptopropyl)triethoxysilane, (3-mercaptopropyl)methyldimethoxysilane, and bis[3-(triethoxysilyl)propyl]tetrasulfide, bis(triethoxysilylpropyl)disulfide, bis(3-(triethoxysilyl)propyl)-fumarate, acryloxypropyltriethoxysilane, bis[3-(trihydroxysilyl)propyl]-tetrasulfide, bis[3-(trihydroxysilyl)propyl]-disulfide, bis[3-(dimethylethoxysilyl)propyl] tetrasulfide, bis[3-(dimethylethoxysilyl)propyl]disulfide, 3-octanoylthio-1-propyltriethoxysilane and its derivatives, 3-acrylamidopropyltriethoxysilane.

The modification of the silica surface with organosilicon compounds, in particular with organosilicon compounds of formula (I), generates various patterns of substituted silicon atoms attached to the surface of the silica particles or attached indirectly to the surface of the silica particles. These substitution patterns have been referred to in the literature as T sites. The correlation of the T sites to the resonance signals in the CP/MAS $^{29}$Si NMR spectrum is discussed in Maciel, G.E. et al., Multinuclear NMR Spectroscopy Studies of Silica Surfaces, in "The Colloid Chemistry of Silica", Advances in Chemistry; American Chemical Society, pp. 269-282 (1992).

The inventive organosilicon-modified silica is characterised by a ratio $(T0 + T1)/T_{tot}$ greater than 15%, wherein $T_{tot} = T0+T1+T2+T3$.

As used herein, T0 sites correspond to a silicon atom originating from the organosilane compound having at least one bond to an oxygen atom in an alkoxy radical, and at least one bond to a carbon atom. Si atoms corresponding to T0 sites have been correlated with the resonance signals with chemical shifts in the range from - 43 ppm to - 49 ppm in the CP/MAS $^{29}$Si NMR spectrum, wherein the chemical shift in ppm is measured relative to the standard tetramethylsilane.

As used herein, T1 sites correspond to a silicon atom originating from the organosilane compound having one bond to an oxygen atom further bonded to a silicon atom on the silica surface, at least one bond to an oxygen atom in an alkoxy radical, and at least one bond to a carbon atom. Si atoms corresponding to T1 sites have been correlated with the resonance signals with chemical shifts in the range from -49 ppm to - 55 ppm in the CP/MAS $^{29}$Si NMR spectrum, wherein the chemical shift in ppm is measured relative to the standard tetramethylsilane.

As used herein, T2 sites correspond to a silicon atom originating from the organosilane compound having two bonds to oxygen atoms further bonded to silicon atoms, which may be a silicon atom on a particle surface and/or a silicon atom of another silane-containing molecule, at least one of which is on the silica surface, one bond to an oxygen atom in an alkoxy radical, and one bond to a carbon atom. Si atoms corresponding to T2 sites have been correlated with the resonance signals with chemical shifts in the range from -56 ppm to -59 ppm in the CP/MAS $^{29}$Si NMR spectrum, wherein the chemical shift in ppm is measured relative to the standard tetramethylsilane.

As used herein, T3 sites correspond to a silicon atom originating from the organosilane compound having three bonds to an oxygen atom further bonded to silicon atoms. At least one of the silicon atoms is a silicon atom on a particle surface, the others may be a silicon atom on a particle surface and/or a silicon atom of another silane-containing molecule. Si atoms corresponding to T3 sites have been correlated with the resonance signals with chemical shifts in the range from -65 ppm to -69 ppm in the CP/MAS $^{29}$Si NMR spectrum, wherein the chemical shift in ppm is measured relative to the standard tetramethylsilane.

The organosilane-modified precipitated silica of the invention typically has a ratio $(T0 + T1)/T_{tot}$ greater than 20 %, preferably greater than 25%, even greater than 30%.

The ratio $(T0 + T1)/T_{tot}$ may be 100%, that is T0 and T1 groups may represent the sole goups in the inventive silica.

The inventive silica typically has a ratio $(T0 + T1)/T_{tot}$ in the range of 15 to 95%, even 25 to 95%, still of 30 to 85%.

The organosilane-modified precipitated silica typically has a CTAB surface area of at least 60 m$^2$/g, preferably of at least 70 m$^2$/g. The CTAB surface area is typically at most 600 m$^2$/g, in particular at most 450 m$^2$/g, even at most 400 m$^2$/g, and still at most 380 m$^2$/g. Typically, the CTAB surface area is between 60 and 450 m$^2$/g, for example between 70 and 350 m$^2$/g.

The precipitated silica according to the invention typically has a BET surface area of between 50 m$^2$/g and 650 m$^2$/g, in particular between 60 m$^2$/g and 500 m$^2$/g, even between 70 and 450 m$^2$/g, for example between 80 and 400 m$^2$/g. BET surface area may be determined according to the Brunauer - Emmett - Teller method as detailed in standard NF ISO 5794-1, Appendix E (June 2010).

The organosilane-modified silica of the invention has a carbon content of at least 0.01 wt%, typically from 0.02 wt% to 15.00 wt%. Throughout the present text the carbon content is defined as the amount of carbon by weight with respect to the total weight of silica. The carbon content is typically less than 10.00 wt%, and it may be even less than 8.00 wt%. Advantageously, the carbon content is from 0.05 wt% to 8.00 wt%, even from 0.10 to 7.00 wt%, preferably from 0.50 to 5.00 wt%, even less than 2.0 wt%.

The expressions wt% and % by weight are used as synonyms.

A second object of the invention is a process for the preparation of an organosilane-modified precipitated silica. The process comprises the steps of:

a) providing a suspension of precipitated silica in water having a pH of 2.0 to 4.0;
b) adding an organosilane to the suspension;
c) reacting the resulting mixture;
d) adjusting the pH to a value of 7.0 to 10.0 with a base;
e) reacting the mixture to obtain an organosilane-modified precipitated silica,

wherein all steps a) to e) are performed in water in the presence of no more than 5000 ppm of an organic compound other than the organosilane.

In particular steps a) to e) are performed in water in the presence of no more than 5000 ppm, preferably no more than 1000 ppm, even more preferably no more than 500 ppm, of an organic compound which is an alcohol.

Advantageously, steps a) to e) are performed in water in the presence of no more than 5000 ppm of any organic compound other than the organosilane, preferably no more than 1000 ppm, more preferably no more than 500 ppm, even no more than 100 ppm. Ideally the amount of any organic compound other than the organosilane is zero.

The precipitated silica suspension in step a) may be obtained by suspending dry precipitated silica in water and adjusting the pH to the value of 2.0 to 4.0.

Any precipitated silica may be used in the inventive process. Mention may be made for instance of the following commercially available precipitated silicas: Zeosil® 1165MP, Zeosil® 1115MP, Zeosil® Premium 200MP, Zeosil® 1085GR, Zeosil® 195HR, Zeosil® 165GR, Zeosil® 115GR, Zeosil® HRS 1200MP, Zeosil® 195GR, Zeosil® 185GR, Zeosil® 175GR, Zeosil® 125GR (all commercially available from Solvay), Ultrasil® 5000GR, Ultrasil® 7000GR, Ultrasil® 9000GR, Ultrasil® VN3GR, Hi-Sil® EZ 160G-D, Hi-Sil® EZ 150G, Hi-Sil® 190G, Hi-Sil® 200G-D, Hi-Sil® HDP-320G, Hi-Sil® 255CG-D, Zeopol® 8755LS, Zeopol® 8745, Newsil® 115GR, Newsil® 2000MP, Tokusil® 315.

Alternatively the precipitated silica suspension may be obtained in a process for the preparation of precipitated silica. Non-limiting examples of processes for the preparation of precipitated silica are disclosed for instance in EP520862, EP670813, EP670814, EP917519, WO 95/09127, WO 95/09128, WO 98/54090, WO 03/016215, WO 2009/112458 or WO 2012/010712.

Precipitated silica is typically obtained via the reaction of an alkaline silicate solution with an acid in water. The process for the production of precipitated silica generally comprises the steps of: reacting at least one silicate with at least one acid, to provide a silica suspension; submitting said silica suspension to a solid-liquid separation step, e.g. a filtration, and optionally washing to provide a cake of precipitated silica; optionally submitting said cake to a liquefaction step to obtain a suspension of precipitated silica; and drying the suspension of wet precipitated silica obtained after the liquefaction step in a drying apparatus.

Thus suspensions of precipitated silica may be obtained either before or after the solid-liquid separation step of the silica precipitation process. Preferably, the silica suspension is obtained from the silica precipitation process after the solid-liquid separation step and the subsequent liquefaction of the filter cake. Preferably the silica suspension is obtained from the silica precipitation process before drying.

The silica particles are present in the suspension in an amount of from 1 to 60 % by weight with respect to the total weight of the suspension. The amount of silica particles is typically at least 5 % by weight, preferably at least 8 % by weight with respect to the total weight of the suspension. The amount of silica particles typically does not exceed 50 % by weight, preferably 45 % by weight, with respect to the total weight of the suspension. The amount of silica particles may advantageously be between 10 and 45 % by weight, preferably between 10 and 40 % by weight with respect to the total weight of the suspension.

The pH of the precipitated silica suspension may be adjusted using any suitable acid, preferably any suitable mineral acid, such as sulfuric acid, hydrochloric acid, nitric acid, phosphoric acid and the like.

In step b) of the process an organosilane is added to the precipitated silica suspension in water. The organosilane is added as such or as a dispersion in water in the absence of any organic solvent.

The organosilane is selected among the organosilanes of formula (I) as detailed above.

The amount of organosilane added to the suspension in step b) of the process is generally calculated on the basis of the weight of silica particles to be dispersed. Typically the organosilane is present in the suspension in an amount of at least 0.5 % by weight with respect to the dry weight of the silica particles. The amount of the organosilane may conveniently be in the range of 0.5 to 30.0 % by weight with respect to the dry weight of the silica particles, preferably 1.0 to 20.0 % by weight. Good results were obtained with an amount of the organosilane in the range of 2.0 to 15.0 % by weight with respect to the dry weight of the silica particles, even 2.0 to 10.0 % by weight.

The mixture thus obtained is allowed to react (step c)). The reaction is generally performed in a suitably stirred reactor.

The reaction in step c) is typically performed at a temperature of from 20 to 100°C at atmospheric pressure, preferably from 25 to 60°C.

The mixture is allowed to react generally for a time of no more than 60 minutes, even no more than 45 minutes, preferably of no more than 30 minutes, even no more than 20 minutes.

At the end of step c) the pH of the reaction mixture is raised to a value of from 7.0 to 10.0 with a suitable base. The pH of the reaction mixture is preferably at least 7.5, even at least 8.0.

Any base can be used although alkali metal hydroxides, such as NaOH or KOH are preferred. In one embodiment of the process the base used in step d) is an alkali metal aluminate, typically sodium aluminate.

The mixture is then allowed to react at this pH for a time of no more of 60 minutes. The reaction time in step d) is generally no more than 45 minutes, even no more than 30 minutes, preferably no more than 20 minutes.

Step d) may be performed at the same temperature as step b) or at a different temperature, either higher or lower. Step d) is preferably performed at the same temperature as step b).

At the end of step d) a suspension of organosilane-modified precipitated silica is obtained.

The suspension may be submitted to a solid-liquid separation step, providing a wet organosilane-modified silica which may subsequently be dried to provide an organosilane-modified silica. Alternatively the organosilane-modified silica suspension may be employed as such.

The inventive precipitated silica can be used in a number of applications, such as absorbent, as additive for concrete or paper, or for the tretament of air or water.

The inventive precipitated silica finds a particularly advantageous application as filler in polymeric compositions. The at least one polymer can be selected among the thermosetting polymers and the thermoplastic polymers. Notable, non-limiting examples of thermosetting polymers include thermosetting resins such as epoxy resins, unsaturated polyester resins, vinyl ester resins, phenolic resins, epoxy acrylate resins, urethane acrylate resins, phenoxy resins, alkyd resins, urethane resins, maleimide resins, and cyanate resins.

Notable, non-limiting examples of suitable thermoplastic polymers include styrene-based polymers such as polystyrene, (meth)acrylic acid ester/styrene copolymers, acrylonitrile/styrene copolymers, styrene/maleic anhydride copolymers, ABS; acrylic polymers such as polymethylmethacrylate; polycarbonates; polyamides; polyesters, such as polyethylene terephthalate and polybutylene terephthalate; polyphenylene ethers; polysulfones; polyaryletherketones; polyphenylene sulfides; thermoplastic polyurethanes; polyolefins such as polyethylene, polypropylene, polybutene, poly-4-methylpentene, ethylene/propylene copolymers, ethylene/ $\alpha$-olefins copolymers; copolymers of $\alpha$-olefins and various monomers, such as ethylene/vinyl acetate copolymers, ethylene/(meth)acrylic acid ester copolymers, ethylene/maleic anhydride copolymers, ethylene/acrylic acid copolymers; aliphatic polyesters such as polylactic acid, polycaprolactone, and aliphatic glycol/aliphatic dicarboxylic acid copolymers.

The inventive silica may advantageously be employed as reinforcing filler in elastomeric compositions. Accordingly a preferred object of the invention is a composition comprising the inventive silica and one or more elastomers, preferably exhibiting at least one glass transition temperature between -150°C and +300°C, for example between -150°C and +20°C.

Notable non-limiting examples of suitable elastomers are diene elastomers. For example, use may be made of elastomers deriving from aliphatic or aromatic monomers, comprising at least one unsaturation such as, in particular, ethylene, propylene, butadiene, isoprene, styrene, acrylonitrile, isobutylene or vinyl acetate, polybutyl acrylate, or their mixtures. Mention may also be made of functionalized elastomers, that is elastomers functionalized by chemical groups positioned along the macromolecular chain and/or at one or more of its ends (for example by functional groups capable of reacting with the surface of the silica), and halogenated polymers. Mention may be made of polyamides, ethylene homo- and copolymer, propylene homo-and copolymer.

Among diene elastomers mention may be made, for example, of polybutadienes (BRs), polyisoprenes (IRs), butadiene copolymers, isoprene copolymers, or their mixtures, and in particular styrene/butadiene copolymers (SBRs, in particular ESBRs (emulsion) or SSBRs (solution)), isoprene/butadiene copolymers (BIRs), isoprene/styrene copolymers (SIRs), isoprene/butadiene/styrene copolymers (SBIRs), ethylene/propylene/diene terpolymers (EPDMs), and also the associated functionalized polymers (exhibiting, for example, pendant polar groups or polar groups at the chain end, which can interact with the silica).

Mention may also be made of natural rubber (NR) and epoxidized natural rubber (ENR).

The polymer compositions can be vulcanized with sulfur or crosslinked, in particular with peroxides or other crosslinking systems (for example diamines or phenolic resins).

In general when preparing polymer compositions comprising precipitated silica as reinforcing filler, at least one (silica/polymer) coupling agent and/or at least one covering agent are added to the composition to promote the dispersion of the silica in the polymeric matrix.

It has now been found that the inventive precipitated silica may be effeeiciantly dispersed into polymeric matrices, in particular elastomeric compositions, without requiring the addition of any coupling agent and/or covering agent.

Additionally it has been found that when using the inventive silica, the total amount of organosilane required to obtain an effective dispersion of the precipitated silica is much lower than the amount that would be required when using a non organosilane-modified silica and an organosilane in the composition.

It has also been found that when the organosilane contains mercapto, sulfide, disulfide or polysulfide functionalities the inventive silica can be advantageously employed for the removal of heavy metals, such as mercury, from water streams.

Accordingly a further object of the present invention is a process for the removal of heavy metals from an aqueous stream, comprising contacting the organosilane-modified precipitated silica, wherein the organosilane moiety comprises at least one functional group selected from mercapto, sulfide, disulfide or polysulfide functional groups, with a contaminated aqueous stream.

The expression "contaminated aqueous stream" is used herein to refer to an aqueous stream containing at least one heavy metal among mercury, arsenic, lead, cadmium, antimony, tin, copper, nickel, cobalt, zinc, chromium, platinum, palladium and gold.

The mercury and/or arsenic and/or other metals may be removed by contacting the aqueous stream containing mercury and/or arsenic and/or other metals with the inventive precipitated silica either in batch mode, for example in a stirred tank, or preferably, in continuous mode. In continuous mode the aqueous solution is passed through one or more fixed beds of the adsorbent in a suitable vessel such as an adsorbent column. Such practices are known and may be used effectively in the present invention.

The invention will be now described with reference to the following examples, whose purpose is merely illustrative and not intended to limit the scope of the invention.

EXAMPLES

ANALYTICAL METHODS

The physicochemical properties of the precipitated silica of the invention were determined using the methods described hereafter.

**CTAB surface area**

The CTAB surface area was determined according to standard NF ISO 5794-1, Appendix G (June 2010).

**Determination of total carbon content**

The total carbon content was measured using a carbon/sulfur analyzer, such as Horiba EMIA 320 V2. The principle of the carbon/sulfur analyzer is based on the combustion of a solid sample in a stream of oxygen in an induction furnace (adjusted to approximately 170 mA) and in the presence of combustion accelerators (approximately 2 g of tungsten (in particular Lecocel 763-266), approximately 1 g of iron and approximatively 0.25 g of tin). The carbon present in the sample to be analyzed (weight of approximately 0.2 g) combines with the oxygen to form $CO_2$, CO. These gases are subsequently analyzed by an infrared detector. The moisture from the sample and the water produced during these oxidation reactions is removed by passing over a cartridge comprising a dehydrating agent (magnesium perchlorate) in order not to interfere with the infrared measurement.

The result is expressed as percentage by weight of elemental carbon with respect to the weight of the silica sample.

### $^{29}$Si NMR Spectroscopy

The product was characterized by 1D $^{29}$Si CP/MAS NMR on a Bruker Avance solid 300 spectrometer working at 7.04 T. A commercial 4 mm high speed probe (DVT4) with a spinning frequency of 4 KHz was used in cross polarization with 90° pulse, a 2 ms contact time and a 2 s recycling time and 10000 transients.

### Example 1

92.8 kg of water, 1.5 kg of $Na_2SO_4$, 0.43 kg of sulfuric acid (7.62 % by weight in water) were introduced into a stainless-steel reactor equipped with an impeller stirring system and a heating jacket and heated up to solution 90°C. Then sodium silicate ($SiO_2/Na_2O$ weight ratio: 3.43; density at 20°C: 1.228±0.006) was introduced into the reaction medium over 25 min at a flow rate of 633 g/min simultaneously with sulfuric acid of the type described above at a flow rate regulated so as to bring the pH of the reaction medium to 4.0.

After 25 min of simultaneous addition, the addition of sulfuric acid was stopped and the addition of sodium silicate was continued to bring the pH of the reaction medium to 8.0. Sodium silicate and sulfuric acid were then simultaneously fed to the reaction medium at such a flow rate to maintain the pH at a value of 8.0.

After 18 min of simultaneous addition the introduction of the sodium silicate was stopped and the addition of the sulfuric acid was continued so as to bring the pH of the reaction medium to a value equal to 4.7.

A reaction slurry of precipitated silica was thus obtained. The slurry was filtered and washed using a filter press so as to recover a silica filter cake with a solid content of 23% by weight.

The filter cake was divided into fractions for further reaction with an organosilane according to the invention.

One of these fractions was subjected to a liquefaction step in a continuous vigorously stirred reactor and then dried by means of a Niro atomizer providing silica S1 in the form of a powder. Silica S1: BET surface area: 224 m$^2$/g; CTAB surface area: 198 m$^2$/g; carbon content: 0 wt%.

### Example 2

One of the fractions of the filter cake obtained in Example 1 (1 kg having a solid content of 23% by weight) was subjected to a liquefaction step in a continuous vigorously stirred 1 L reactor. The pH of the suspension was adjusted at 4.0 by additon of sulfuric acid (concentration : 7.62% by weight).

6.9 g of bis(3-triethoxysilylpropyl)disulfide were added to the suspension with a perilstatic pump. The amount of organosilane was 3.0 % by weight of organosilane relative to the dry weight of $SiO_2$. The reaction medium was stirred over a period of 300 s. Then, the pH was readjusted at 9.0 a sodium aluminate solution ($Al_2O_3$ concentration is equal to 22.4 % by weight). After pH readjustment the mixture was stirred over a period of 500 s.

The silica suspension thus obtained was dried with a Niro atomizer under inert atmosphere ($N_2$). Silica S2 was thus obtained in the form of a powder. Silica S2: BET surface area: 184 m$^2$/g; CTAB surface area: 176 m$^2$/g; (T0 + T1)/$T_{tot}$: 50%; carbon content: 0.79 wt%.

### Example 3

The procedure of Example 2 was followed on a further fraction of the filter cake obtained in Example 1 using 11.5 g of bis(3-triethoxysilylpropyl)disulfide. The amount of organosilane was 5.0% by weight of organosilane relative to the dry weight of $SiO_2$. Silica S3 was thus obtained in the form of a powder. Silica S3: BET surface area: 183 m$^2$/g; CTAB surface area: 174 m$^2$/g; (T0 + T1)/$T_{tot}$: 31%; carbon content: 1.03 wt%.

### Example 4

The procedure of Example 2 was followed on a further fraction of the filter cake obtained in Example 1 using 16.1 g of bis(3-triethoxysilylpropyl)disulfide. The amount of organosilane was 7.0% be weight of organosilane relative to the dry weight of $SiO_2$. Silica S4 was thus obtained in the form of a powder. Silica S4: BET surface area: 181 m$^2$/g; CTAB surface area: 169 m$^2$/g; (T0 + T1)/$T_{tot}$: 74%; carbon content: 1.58 wt%.

**Example 5**

The procedure of Example 2 was followed on a further fraction of the filter cake obtained in Example 1 using 31.4 g of bis(3-triethoxysilylpropyl)disulfide. The amount of organosilane was 11.4% be weight of organosilane relative to the dry weight of $SiO_2$. Silica S5 was thus obtained in the form of a powder. Silica S5: BET surface area: 188 $m^2$/g; CTAB surface area: 166 $m^2$/g; (T0 + T1)/$T_{tot}$: 28%; carbon content: 2.84 wt%.

**Example 6**

13.4 kg of water, 0.209 kg of $Na_2SO_4$, 0.11 kg of sulfuric acid (7.7 % by weight in water) were introduced into a stainless-steel reactor equipped with an impeller stirring system and a heating jacket and heated up to solution 90°C. Then sodium silicate ($SiO_2$/$Na_2O$ weight ratio: 3.46; density at 20°C: 1.233±0.006) was introduced into the reaction medium over 25 min at a flow rate of 92.2 g/min simultaneously with sulfuric acid of the type described above at a flow rate regulated so as to bring the pH of the reaction medium to 4.0.

After 25 min of simultaneous addition, the addition of sulfuric acid was stopped and the addition of sodium silicate was continued to bring the pH of the reaction medium to 8.0. Sodium silicate and sulfuric acid were then simultaneously fed to the reaction medium at such a flow rate to maintain the pH at a value of 8.0.

After 18 min of simultaneous addition the introduction of the sodium silicate was stopped and the addition of the sulfuric acid was continued so as to bring the pH of the reaction medium to a value equal to 4.7.

A reaction slurry of precipitated silica was thus obtained. The slurry was filtered and washed using a filter press so as to recover a silica filter cake with a solid content of 23% by weight.

The filter cake was divided into fractions for further reaction with an organosilane according to the invention.

One of these fractions was subjected to a liquefaction step in a continuous vigorously stirred reactor and then dried by means of a Niro atomizer providing silica S6 in the form of a powder. Silica S6: BET surface area: 245 $m^2$/g; CTAB surface area: 240 $m^2$/g; carbon content: 0 wt%.

**Example 7**

The procedure of Example 2 was followed on a fraction of the filter cake obtained in Example 6 using 31.4 g of bis(3-triethoxysilylpropyl)disulfide. The amount of organosilane was 11.4% be weight of organosilane relative to the dry weight of $SiO_2$. Silica S7 was thus obtained in the form of a powder. Silica S7: BET surface area: 187 $m^2$/g; CTAB surface area: 165 $m^2$/g; (T0 + T1)/$T_{tot}$ : 20%; carbon content: 2.98 wt%.

**Examples 8-11 and Comparative Example 1**

Elastomeric compositions comprising precipitated silica were prepared as described below.

**General procedure for the preparation of the rubber compositions**

The process for the preparation of the rubber compositions was carried out in two successive phases: a first phase of thermomechanical working, followed by a second phase of mechanical working at temperatures of less than 110°C to introduce the vulcanization system.

The first phase was carried out using a mixing device, of internal mixer type, of Brabender brand (capacity 70 mL). In a first pass the elastomers and the silica (introduction in instalments) were mixed with the additive and coupling agent (only in the case of non organosilane-modified silica). The duration was between 6 and 7 minutes. According to the silica used, the initial temperature and the speed of the rotors were set either to achieve high dropping temperatures of approximately 150-160°C in order to obtained a good silanization of the silica (process A) or to achieve final temperature of 120- 130°C (process B).

After cooling the mixture (temperature of less than 100°C), the compound was remilled. The duration of this pass was 3 minutes and final temperature was below 130°C.

After cooling the mixture (temperature of less than 100°C), the vulcanization system (sulfur, CBS and DPG) were added during the second phase. It was carried out on an open mill, preheated to 50°C. The duration of this phase was between 2 and 6 minutes.

Each final mixture was subsequently calendered in the form of plaques with a thickness of 2-3 mm for testing of their mechanical and dynamic properties.

The compositions, expressed as parts by weight per 100 parts of elastomers (phr), are described in Table 1 below.

Table 1

| Description | Comp. Ex 1 | Ex. 8 | Ex. 9 | Ex. 10 | Ex. 11 |
|---|---|---|---|---|---|
| Mixing protocol | A | B | B | B | B |
| sSBR | 110 | 110 | 110 | 110 | 110 |
| BR | 20 | 20 | 20 | 20 | 20 |
| S1 | 80 | | | | |
| S2 | | 72 | | | |
| S3 | | | | | 84 |
| S4 | | | 75 | | |
| S5 | | | | 78 | |
| TESPD | 9.1 | - | - | - | - |
| N 330 | 3.0 | 3.0 | 3.0 | 3.0 | 3.0 |
| Stearic Acid | 2.0 | 2.0 | 2.0 | 2.0 | 2.0 |
| TDAE oil | 20.0 | 20.0 | 20.0 | 20.0 | 20.0 |
| ZnO | 2.5 | 2.5 | 2.5 | 2.5 | 2.5 |
| 6-PPD | 1.9 | 1.9 | 1.9 | 1.9 | 1.9 |
| | | | | | |
| Sulfur | 1.7 | 1.7 | 1.7 | 1.7 | 1.7 |
| CBS | 2.0 | 2.0 | 2.0 | 2.0 | 2.0 |
| DPG | 1.5 | 1.5 | 1.5 | 1.5 | 1.5 |

sSBR: Oil extended solution SBR, Buna VSL4526-2HM from Lanxess with 45% of vinyl units; 26% of styrene units; Tg of -30°C, 37.5 phr of TDAE
BR: Buna CB 25 from Lanxess
TESPD: Bis[3-(triethoxysilyl)propyl]disulfide, Xiameter Z-6920 from Dow Corning
TDAE oil, Vivatec 500 from Hansen & Rosenthal KG
6-PPD: N-(1,3-Dimethylbutyl)-N-phenyl-para-phenylenediamine, Santoflex 6-PPD from Flexsys
CBS: N-Cyclohexyl-2-benzothiazolesulfenamide, Rhenogran CBS-80 from Rhein Chemie
DPG: Diphenylguanidine, Rhenogran DPG-80 from RheinChemie

**Properties of the vulcanisates**

The measurements were carried out on the optimally vulcanized compositions (T98) for a temperature of 160°C. Uniaxial tensile tests were carried out in accordance with the instructions of the standard NF ISO 37 with test specimens of H2 type at a rate of 500 mm/min on an Instron 5564 device. The 300% modulus, corresponding to the stress measured at 300% of tensile strain, is expressed in MPa. The tensile strength is expressed in MPa and elongation at break is expressed in MPa.

The Shore A hardness measurement on the vulcanisates was carried out according to standard ASTM D 2240. The given value was measured at 3 seconds.

The values for the loss factor (tan $\delta$), was recorded on vulcanized samples (parallelepipedal specimen of cross section 8 mm2 and of height 7 mm)). The sample is subjected to a double alternating sinusoidal shear strain at a temperature of 40° C and at a frequency of 10 Hz. The strain amplitude sweeping processes were performed according to an outward-return cycle, proceeding outward from 0.1% to 50% and then returning from 50% to 0.1%. The values reported in Table 2 are obtained from the return strain amplitude scanning and concern the maximum value of the loss factor (tan$\delta$ max).

Table 2

| Description | Comp. Ex 1 | Ex. 8 | Ex. 9 | Ex. 10 | Ex. 11 |
|---|---|---|---|---|---|
| 300% Modulus (MPa) | 8.6 | 6.4 | 6.9 | 8.3 | 8.4 |
| Tensile strength (MPa) | 15.2 | 16.4 | 16.6 | 14.7 | 15.8 |
| Elongation at break (%) | 453 | 600 | 557 | 451 | 500 |
| | | | | | |
| shore A | 63 | 62 | 62 | 68 | 72 |
| tan$\delta$ max | 0.248 | 0.212 | 0.199 | 0.197 | 0.219 |

The data in Table 2 show that the inventive silica allow to obtain elastomeric compositions having good mechanical properties without the addition of any coupling agent during the preparation of the elastomeric mixture. The compositions comprising the inventive silica also exhibit a reduced energy dissipation with respect to compositions containing precipitated silica and the same organosilane (TESPD).

**Example 12: mercury removal form water**

The inventive silicas are also useful for the removal of heavy metals, such as mercury, from water streams.
An initial solution ($S_i$) containing 8.7 mg/L of $HgCl_2$ in water was prepared. The solution was divided in fractions: three 200 mL fractions were contacted with different amounts of the inventive silica S7 at the following concentration: 1g/L, 5g/L and 50g/L. The suspensions were stirred for 3h at ambient temperature. Three 200 mL fractions were contacted with activated carbon at the same concentration.
After 3 h, the silica was filtered off and the supernatant analyzed. Mercury concentration was measured using inductively coupled plasma (ICP-OES using a PlasmaQuant PQ9000 Elite instrument).
Table 3 provides the amount of mercury removed from water for each of the test samples in comparison with the amount removed by activated carbon.

Table 3

| Absorbent (g/L) | Activated carbon | S7 |
|---|---|---|
| 1 | 99.0 % | 99.6% |
| 5 | 99.7% | >99.8% |
| 50 | >99.7% | >99.8% |

The test was repeated using an initial solution containg 9.2 mg/L of $Hg(NO_3)_2$ in water. The results are reported in Table 4, which shows the amount of mercury removed from water for each of the test samples in comparison with the amount removed by activated carbon.

Table 4

| Absorbent (g/L) | Activated carbon | S7 |
|---|---|---|
| 1 | 99.0 % | 99.5 |
| 5 | >99.7% | >99.8% |
| 50 | >99.7% | >99.8% |

The tests show that the inventive silica is as effective as activated carbon in the removal of mercury from water.

**Claims**

1.    An organosilane-modified precipitated silica **characterized in that** a solid-state Si nuclear magnetic resonance spectrum of the organosilane-modified precipitated silica exhibits a ratio (T0 + T1)/$T_{tot}$ greater than 15%, wherein: $T_{tot}$ = T0+T1+T2+T3, T0 is the integrated intensity of a peak having a chemical shift in the CP/MAS $^{29}$Si NMR

spectrum in the range of -43 ppm to - 49 ppm, T1 is the integrated intensity of a peak having a chemical shift in the CP/MAS $^{29}$Si NMR spectrum in the range of -49 ppm to -55 ppm, T2 is the integrated intensity of a peak having a chemical shift in the CP/MAS $^{29}$Si NMR spectrum in the range of -56 ppm to -59 ppm, and wherein T3 is the integrated intensity of a peak having a chemical shift in the CP/MAS $^{29}$Si NMR spectrum in the range of -65 ppm to -69 ppm.

2. Precipitated silica according claim 1 **characterised in that** it comprises organosilane moieties chemically bound to Si atoms, said organosilane moieties deriving from at least one organosilane of formula (I): $R_nSiX_{4-n}$ wherein each R is independently selected from the group consisting of hydrocarbon radicals comprising 1 to 12 carbon atoms and organofuctional hydrocarbon radicals comprising 1 to 12 carbon atoms, each X is independently selected from the group consisting of the alkoxy radicals comprising 1 to 12 carbon atoms, and n is 1, 2 or 3, preferably n is 1.

3. Precipitated silica according to claim 2 wherein the organosilane of formula (I) comprises at least one organofuctional hydrocarbon radical comprising 1 to 12 carbon atoms wherein the functionality is a mercapto, sulfide, disulfide, polysulfide, amino, carboxylic acid, carbinol, ester, or an amido functionality, preferably a mercapto, sulfide, disulfide or polysulfide functionality.

4. Precipitated silica according to claims 2 or 3 wherein the organosilane of formula (I) is selected from the group consisting of (3-mercaptopropyl)trimethoxysilane, (3-mercaptopropyl)triethoxysilane, (3-mercaptopropyl)methyldimethoxysilane, and bis[3-(triethoxysilyl)propyl]tetrasulfide, bis(triethoxysilylpropyl)disulfide, bis(3-(triethoxysilyl)propyl)-fumarate, acryloxypropyltriethoxysilane, bis[3-(trihydroxysilyl)propyl]-tetrasulfide, bis[3-(trihydroxysilyl)propyl]-disulfide, bis[3-(dimethylethoxysilyl)propyl]tetrasulfide, bis[3-(dimethylethoxysilyl)propyl]disulfide, 3-octanoylthio-1-propyltriethoxysilane and its derivatives, 3-acrylamidopropyltriethoxysilane.

5. Precipitated silica according to anyone of the preceding claims having a carbon content from 0.01 to 15.00 wt% .

6. A process for the preparation of an organosilane-modified precipitated silica of anyone of claims 1 to 5, said process comprising the steps of:

    a) providing a suspension of precipitated silica in water having the pH at a value of 2.0 to 4.0;
    b) adding to the suspension an organosilane;
    c) reacting the resulting mixture;
    d) adjusting the pH to a value of 7.0 to 10.0 with a base;
    e) reacting the mixture to obtain an organosilane-modified precipitated silica,

    **characterized in that** steps a) to e) are performed in water in the presence of not more than 5000 ppm of an organic compound other than the organosilane.

7. The process of claim 6 which is performed in water in the presence of no more than 5000 ppm, preferably no more than 1000 ppm, even more preferably no more than 500 ppm, of an organic compound which is an alcohol.

8. The process of claim 6 or 7 wherein the duration of step c) and/or e) is of no more than 60 minutes, preferably no more than 30 minutes.

9. The process of anyone of claims 6 to 8 wherein the amount of organosilane added to the suspension in step b) is in the range of 0.5 to 30.0 % by weight with respect to the dry weight of the silica.

10. The process of anyone of claims 6 to 9 further comprising the steps of:

    a') reacting at least one silicate with at least one acid agent, to provide a silica suspension;
    a") submitting said silica suspension to a liquid-separation step to provide a silica cake;
    a"') submitting said silica cake to a liquefaction step to obtain a suspension of precipitated silica; and
    a"") optionally adjusting the pH to 2.0 to 4.0,

    wherein said steps a') to a"") are performed before step a).

11. A polymer composition comprising the precipitated silica of any one of claims 1 to 5 or obtained by the process as claimed in one of claims 6 to 10.

**12.** An article comprising at least one composition as claimed in claim 11.

**13.** The article of claim 12 consisting of a footwear sole, a floor covering, a gas barrier, a flame-retardant material, a roller for cableways, a seal for domestic electrical appliances, a seal for liquid or gas pipes, a braking system seal, a pipe, a sheathing, a cable, an engine support, a conveyor belt, a transmission belt or a tire.

**14.** A process for the removal of heavy metals from a contaminated aqueous stream, comprising contacting organosilane-modified precipitated silica according to any one of claims 1 to 5 or as prepared according to any one of claims 6 to 10 with the contaminated aqueous stream.

**15.** A process according to claim 14 wherein the heavy metal is one or more of mercury, arsenic, lead, cadmium, antimony, tin, copper, nickel, cobalt, zinc, chromium, platinum, palladium and gold.

Europäisches
Patentamt

European
Patent Office

Office européen
des brevets

# EUROPEAN SEARCH REPORT

Application Number

EP 18 30 6504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 001 303 A (DEGUSSA) 31 January 1979 (1979-01-31) * page 1, line 5 - page 4, line 20 * * examples 1-5 * | 1-5, 11-13 | INV. C09C1/30 C02F1/28 C08K3/013 C01B33/18 |
| Y | | 6-10 | C01B33/193 |
| X | US 5 412 018 A (KRIVAK THOMAS G [US] ET AL) 2 May 1995 (1995-05-02) * column 10, line 38 - column 12, line 35 * * examples 1-4 * * tables 1,2 * | 1-4, 11-13 | |
| X | US 2003/162881 A1 (PANZ CHRISTIAN [DE] ET AL) 28 August 2003 (2003-08-28) * paragraphs [0011] - [0120], [0295] - [0296] * * examples 1-5 * | 1-5, 11-13 | |
| X | US 2008/071129 A1 (YANG ARTHUR J [US] ET AL) 20 March 2008 (2008-03-20) * paragraphs [0019] - [0073] * | 1-5,14, 15 | |
| Y,D | US 2008/069753 A1 (FLOESS JOACHIM K [US] ET AL) 20 March 2008 (2008-03-20) * paragraphs [0005] - [0059]; examples 1-5 * | 6-10 | TECHNICAL FIELDS SEARCHED (IPC) C09C C02F C01B C08K |

The present search report has been drawn up for all claims

| Place of search | Date of completion of the search | Examiner |
|---|---|---|
| The Hague | 14 May 2019 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6504

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2019

| Patent document cited in search report | | Publication date | Patent family member(s) | | Publication date |
|---|---|---|---|---|---|
| GB 2001303 | A | 31-01-1979 | BE | 868524 A | 27-12-1978 |
| | | | CA | 1117734 A | 09-02-1982 |
| | | | DE | 2729244 A1 | 04-01-1979 |
| | | | ES | 468615 A1 | 01-08-1979 |
| | | | FR | 2395952 A1 | 26-01-1979 |
| | | | GB | 2001303 A | 31-01-1979 |
| | | | JP | S632886 B2 | 21-01-1988 |
| | | | JP | S5411899 A | 29-01-1979 |
| | | | NL | 7802850 A | 03-01-1979 |
| | | | SE | 432094 B | 19-03-1984 |
| US 5412018 | A | 02-05-1995 | AT | 132115 T | 15-01-1996 |
| | | | DE | 69115904 D1 | 08-02-1996 |
| | | | DE | 69115904 T2 | 14-08-1996 |
| | | | EP | 0534997 A1 | 07-04-1993 |
| | | | ES | 2084163 T3 | 01-05-1996 |
| | | | JP | H0699140 B2 | 07-12-1994 |
| | | | JP | H05508605 A | 02-12-1993 |
| | | | US | 5094829 A | 10-03-1992 |
| | | | US | 5412018 A | 02-05-1995 |
| | | | WO | 9119672 A1 | 26-12-1991 |
| US 2003162881 | A1 | 28-08-2003 | AT | 368708 T | 15-08-2007 |
| | | | BR | 0202882 A | 03-06-2003 |
| | | | CN | 1405085 A | 26-03-2003 |
| | | | DE | 10138492 A1 | 13-02-2003 |
| | | | EP | 1281733 A1 | 05-02-2003 |
| | | | ES | 2290216 T3 | 16-02-2008 |
| | | | JP | 4440520 B2 | 24-03-2010 |
| | | | JP | 2003160327 A | 03-06-2003 |
| | | | KR | 20030012822 A | 12-02-2003 |
| | | | TW | I296995 B | 21-05-2008 |
| | | | US | 2003162881 A1 | 28-08-2003 |
| US 2008071129 | A1 | 20-03-2008 | US | 2008071129 A1 | 20-03-2008 |
| | | | WO | 2005028063 A1 | 31-03-2005 |
| US 2008069753 | A1 | 20-03-2008 | CN | 101517012 A | 26-08-2009 |
| | | | EP | 2066754 A2 | 10-06-2009 |
| | | | HK | 1131403 A1 | 14-02-2014 |
| | | | JP | 5650786 B2 | 07-01-2015 |
| | | | JP | 2010503604 A | 04-02-2010 |
| | | | JP | 2013139389 A | 18-07-2013 |
| | | | US | 2008069753 A1 | 20-03-2008 |
| | | | WO | 2008033506 A2 | 20-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008033506 A
- CN 105060304
- EP 520862 A
- EP 670813 A
- EP 670814 A
- EP 917519 A
- WO 9509127 A
- WO 9509128 A
- WO 9854090 A
- WO 03016215 A
- WO 2009112458 A
- WO 2012010712 A

**Non-patent literature cited in the description**

- Multinuclear NMR Spectroscopy Studies of Silica Surfaces. **MACIEL, G.E. et al.** The Colloid Chemistry of Silica'', Advances in Chemistry. American Chemical Society, 1992, 269-282